Europäisches Patentamt

(19) European Patent Office

Office européen des brevets

(11) Publication number: **0 059 030**
**B1**

(12) **EUROPEAN PATENT SPECIFICATION**

(45) Date of publication of patent specification: **12.11.86**

(21) Application number: **82300380.1**

(22) Date of filing: **26.01.82**

(51) Int. Cl.⁴: **B 23 B 31/12**

(54) Drill Chucks.

(30) Priority: **19.02.81 GB 8105198**

(43) Date of publication of application:
**01.09.82 Bulletin 82/35**

(45) Publication of the grant of the patent:
**12.11.86 Bulletin 86/46**

(84) Designated Contracting States:
**DE FR GB IT**

(56) References cited:
**FR-A- 618 068**
**FR-A- 929 184**
**FR-A-2 131 506**
**FR-A-2 146 717**
**FR-A-2 261 091**
**FR-A-2 306 039**
**FR-E- 33 635**

(73) Proprietor: **THE JACOBS MANUFACTURING COMPANY LIMITED**
**Archer Tool Works Archer Road**
**Sheffield S8 0JS (GB)**

(72) Inventor: **Derbyshire, George Cecil**
**"Saxons" Top Park**
**Gerrards Cross Buckinghamshire (GB)**

(74) Representative: **Paget, Hugh Charles Edward et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The invention relates to drill chucks.

The well known kind of drill chuck to which the invention relates has a body part in which converging apertures are formed for the reception of respective jaws, said body part being formed also, intermediate its ends, with a circumferential groove for the reception of a nut with a tapering internal thread so that the latter can engage thread elements formed on the respective jaws. This kind of chuck, which will throughout this specification be termed of the kind referred to, has a bevel gears element which can be operated by an extraneous key to rotate the nut so that the jaws can be advanced through a forward portion of the body part to grip a drill shank or so that the jaws can be retracted to release the drill shank. Because it has been impossible to otherwise assemble the nut in its groove, the nut has heretofore been formed in two parts, that is to say has been diametrically split, and has sometimes been held together in its groove by the bevel gear element which, being formed as an unbroken ring, has been fitted tightly around the assembled nut. In other cases, when the bevel gear element has been formed integrally with the nut and has therefore itself been formed in two parts, the halves of the integral nut and bevel gear element have been held together in the groove in the body part by a cylindrical sleeve.

It has previously been proposed to provide a drill chuck with a body part constituted by two separate parts, that is to say by a main body element and a nose cone element connected together (see FR—E—33635), the main body element having grooves which in the assembled chuck form the converging apertures for the reception of the jaws. However, in that case the nose cone element was not formed with key pieces located within forward portions of the grooves in the main body element and the jaws were of square cross sectional shape.

It has previously been proposed to make other work holding jaws of non-circular cross sectional shape (see FR—A—929184) but this was not in a drill chuck but in a special workholder.

The fact that, except for the arrangement previously referred to in FR—E—33635, it has heretofore been necessary to very accurately drill and ream the converging apertures for the reception of the respective jaws has meant that the body part has been a relatively expensive item to manufacture and has dictated the fact that the jaws have been of circular cross section. The only thing preventing complete rotational movement of circular cross section jaws in their apertures has been the engagement of their thread elements with very small portions of the tapering internal thread of the nut. Due to the converging nature of the apertures and the resultant tapering of the internal thread, working clearances are present between the thread elements, which allow a partial rotational movement of the jaws in their apertures. This partial rotational movement is known as "toggle" and is detrimental to the maintenance of chuck accuracy. The need to prevent, or reduce to a minimum, such rotational looseness in a newly manufactured chuck has necessitated very high quality control and therefore high cost in manufacture.

The square section jaws of FR—E—33635 have provided some resistance to rotational looseness, but only at the expense of high tooling costs.

The invention as claimed is intended to provide a remedy. It solves the problem of how to design a drill chuck in which the jaws are better able to resist rotational movement in their apertures.

The advantages offered by the invention are mainly that the bevel gear, or an element comprising the nut and bevel gear formed integrally together, is able to be formed as an unbroken ring, that since the jaws are better able to resist rotational movement in their apertures the maintenance of chuck accuracy is better able to be maintained, and also that the need for very high quality control is reduced so that manufacturing costs are minimised.

In order that the invention may be fully understood and readily carried into effect, the same will now be described, by way of example only, with reference to the accompanying drawings, of which:—

Figure 1 is a side view of a drill chuck embodying the invention,

Figure 2 is an end view thereof, in the direction of arrow 2 in Figure 1,

Figure 3 is a longitudinal section on the line 3—3 in Figure 1,

Figure 4 is an exploded view which will presently be referred to,

Figure 5 is a view similar to Figure 4 and illustrating a possible modification which will be referred to, and

Figure 6 is a view similar to Figure 3 and incorporating the modification illustrated in Figure 5.

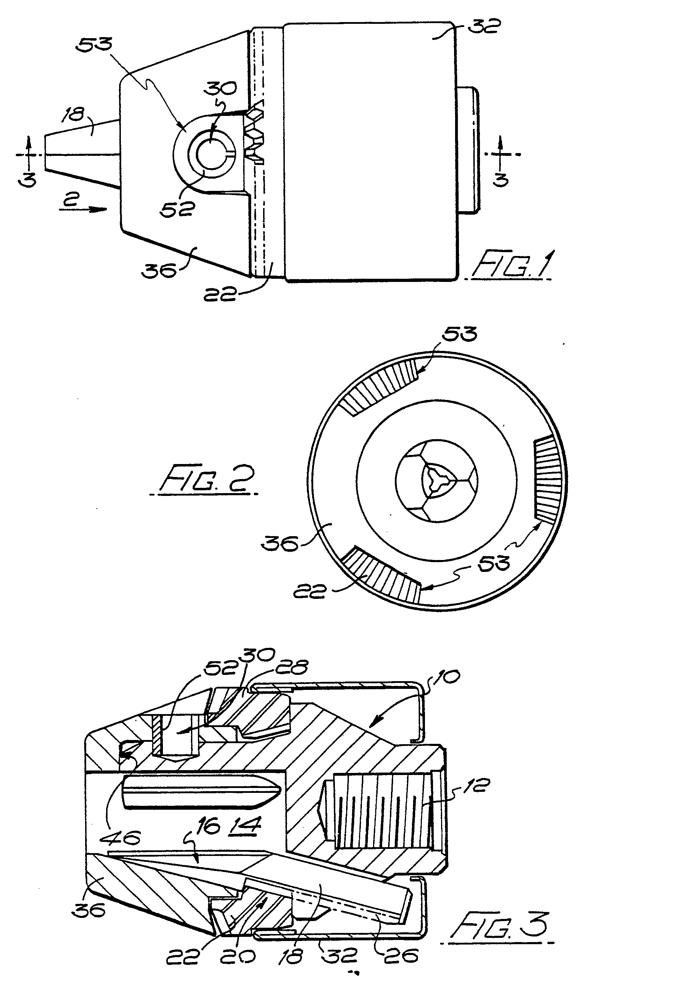

Referring now to Figures 1 to 3 of the drawings, the drill chuck there illustrated includes a body part generally indicated 10 having at one end a screwthreaded recess 12 for the reception of a power tool driving spindle (not shown) and at its other end an axially extending bore 14 for the reception of a drill shank (not shown). Three equally spaced apertures 16 diverge from the axially extending bore 14 for the reception of respective jaws 18, the jaws being slidably mounted in the apertures so that as they are advanced they converge to grip a drill shank (not shown) between parallel end portions and when they are retracted into the body part they release the shank.

A circumferential groove 20 extends around the body part intermediate the ends of the latter and breaks into the apertures 16. An integral nut and bevel gear element 22 is located in the groove and the nut portion thereof, which is formed with a tapering internal screwthread, has threaded engagement with thread elements 26 of the jaws 18. The bevel gear portion 28 of the element 22 is located rearwardly of a portion of the body part in which three equally spaced radial blind holes 30 are formed, said blind holes being provided for the reception of a pilot end of an extraneous chuck key (not shown) having a bevel pinion capable of engaging the teeth of the bevel gear portion 28. In this way the chuck jaws can be simultaneously advanced or retracted, as required, in known manner. A cylindrical sleeve 32 of pressed steel construction is press fitted at one end on a stepped down diameter of the bevel gear portion 28. The other end of the sleeve is provided with an inturned flange portion which engages rotatably on a rearward portion of the body part.

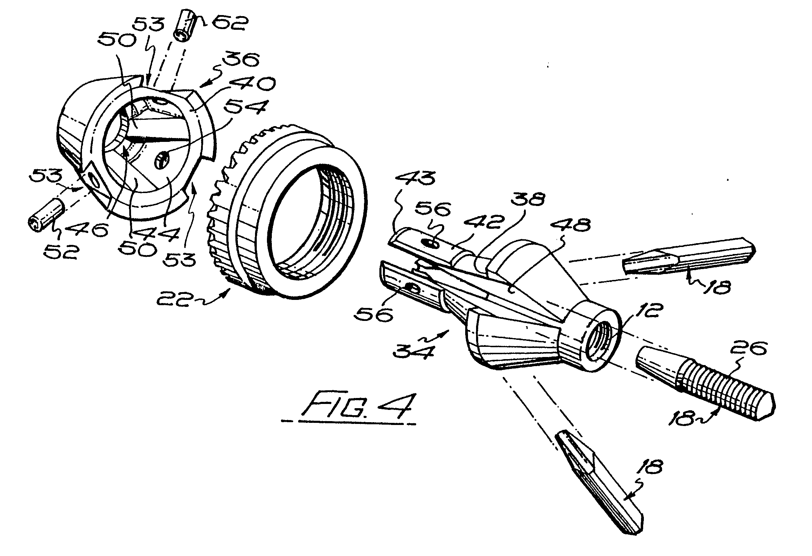

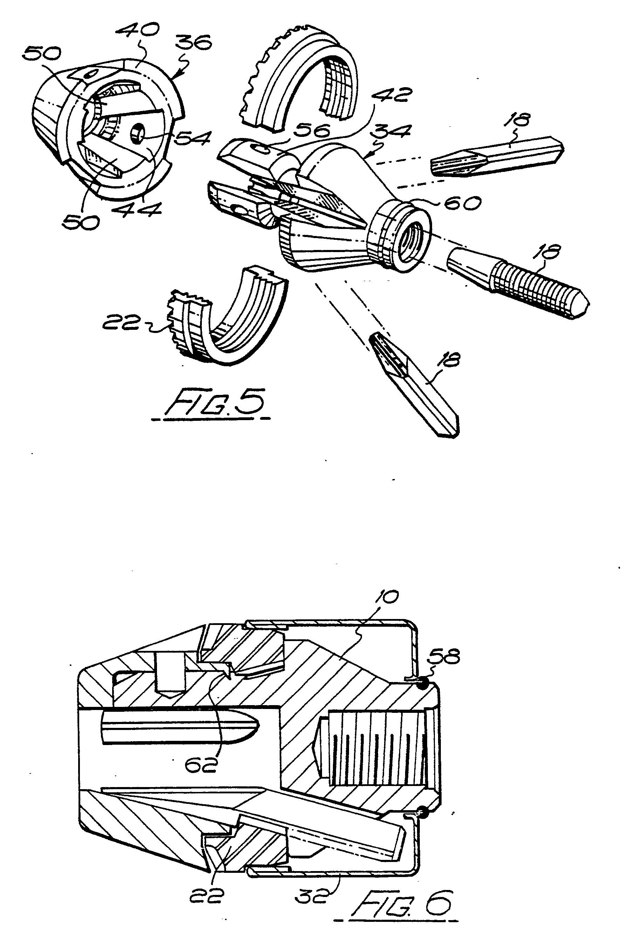

Referring now to Figure 4, this illustrates the two part construction of the body part 10, that is to say the fitment together of a main body element 34 and a nose cone element 36 with the integral nut and bevel gear element 22, which is shown to be formed as an unbroken ring, disposed between then. As shown, one side wall of the circumferential groove 20 in which the nut and bevel gear element is located in the assembled body part is constituted by a shoulder 38 formed on the main body element. The other side wall of said groove is constituted by an end surface 40 of the nose cone element 36. As the main body element and the nose cone element are assembled together, part cylindrical surfaces 42 of the former engage and slide along complementary part cylindrical surfaces 44 within the nose cone element until end surfaces of the main body element abut against an internal shoulder 46 formed within the nose cone element. Bevel surfaces 43 at the ends of said part cylindrical surfaces mate with complementary tapered surfaces within the nose element as the two parts are assembled together.

It will be seen that the three equally spaced apertures 16 for the reception of the respective jaws 18 are formed by three converging grooves 48 in the main body element and by respective key pieces 50 which are formed, as shown, within the nose cone element. When the two components are assembled together the key pieces 50 are located within the forward portions of said grooves. It will also be seen that the grooves 48 are each of mainly V-form, the cross sectional shape of each jaw 18 being of complementary shape.

Referring again to Figure 3, it will be seen that when the body part has been assembled, respective split spring steel sleeves 52 are inserted through aligned holes in the nose cone element and the main body element to form liners for the blind holes in which a pilot end of an extraneous chuck key can be received, that is to say inserted through holes 54 in the nose cone element and into blind holes 56 in the main body element. The nose cone element is provided with notches 53 in the region of the holes 54, which, as best seen in Figure 2, reveal sections of the bevel gear element where the bevel pinion of the chuck key can be engaged with the bevel gear element. The arrangement is such that by virtue of the V-form of each groove 48 and the fairly flat curvature of the surfaces of the key pieces 50 forming the outer surfaces of the apertures 16, the jaws are held very securely against rotation and outward movement in said apertures. The arrangement is also such that the main body element and the nose cone element can conveniently be manufactured by being moulded or cast. That is to say, each of these items as an alternative to being machined from solid materials can be manufactured either as a synthetic plastics moulding or as a diecasting. The other component parts could also of course be made in a conventional manner or alternatively, for example, the jaws 18 and the integral nut and bevel gear elements 22 may be made of sintered metal. The cylindrical sleeve 32 could also be machined or be of pressed steel construction or could be a synthetic plastics moulding. The chuck construction is such that manufacturing costs are likely to be much lower than those achieved heretofore in drill chuck manufacture. Nevertheless, the chuck is of pleasing appearance and the nose portion of the chuck is particularly slim so that a person using the chuck has a very clear view of a workpiece even when he is using a relatively short drill bit. The light weight and small dimensions of the chuck are of particular significance.

Referring now to Figure 5, in a possible modification of the invention described above, the forward portion of the main body element, that is to say the portion providing the part cylindrical surfaces 42, has been made a slightly greater diameter than hitherto and the aperture for its reception in the nose cone has been made correspondingly larger so that its wall thickness in the region of the holes 54 is very much reduced. The arrangement is such that the increased wall thickness of the forward portion of the main body element where the blind holes 56 are located ensures an adequate location for the pilot end of the extraneous chuck key without the need for lining them with the spring steel sleeves, that is to say if the main body element is made of metal. If the main body element is made of synthetic plastics material it may still require the metal sleeves 52 shown in Figure 4.

A disadvantage of the modification just described is that the increased diameter of the forward portion of the main body element prevents the fitment of the integral nut and bevel gear element as an unbroken ring. Consequently, it will be seen that this requires to be diametrically split for fitment in its groove in the body part (and it will of course be realised that this being the case it is not necessary to fit the nut and bevel gear element as the components of the body part are being assembled together; it can be fitted in position in a subsequent assembly operation). In Figure 6, the integral nut and bevel gear element is shown to be held together in its groove by the cylindrical sleeve 32, and, because in this case the inadvertent displacement of said sleeve would constitute a serious safety hazard, the chuck is shown to be provided with abutment means acting between the cylindrical sleeve and the portion of the body part on which the flange portion of the sleeve is rotatably engaged, the abutment means in this case being consituted by a resilient split ring 58 snap fitted in a groove 60 in the body part. A further detail which is illustrated in Figure 6 is the provision of inturned lip portions 62 formed within the nose cone element and adapted to snap fit into shallow grooves in the part cylindrical surfaces 42 of the main body element when the two parts are fitted together. This detail has been incorporated because of the fact that in this construction the spring steel sleeves 52 provided in the first described embodiment have been omitted. However, it will be understood that this same detail could have been included in said first described embodiment.

In a further possible modification, the body part assembly illustrated in Figure 5 could be fitted with nut and bevel gear elements formed separately, the nut element being diametrically split to enable it to be located in its groove and the bevel gear element being formed as an unbroken ring so that it can encircle the nut element and hold it together.

Various other modifications may be made. For example, the abutment means fitted to the chuck illustrated in Figure 6 need not necessarily be constituted by a resilient split ring snap fitted in a groove in the body part. Such abutment means could alternatively be constituted, for example, by a shoulder formed integrally on the portion of the body part with which the cylindrical sleeve is rotatably engaged and over which the inturned flange portion of the sleeve which forms the bearing surface between the sleeve and the body part must be pressed to take up its required position. As a further alternative, the abutment means could be consitituted by a self-locking ring pressed onto the portion of the body part with which the inturned flange portion of the cylindrical sleeve is rotatably engaged, to abut against the end of said sleeve, the self-locking ring having radially inwardly projecting resilient fingers arranged to bite into the surface of the portion of the body part referred to. As a variation of this, such radially inwardly projecting resilient fingers arranged to bite into the surface of the body part could be formed integrally with the cylindrical sleeve. The cylindrical sleeve could be made of a synthetic plastics material instead of being of pressed steel construction.

By way of explanation it may here be mentioned that the V-form or T-form of groove is particularly advantageous because of the fact that the problem of shortage of space in the cross sectional shape of the main body part for accommodating a plurality of jaws is alleviated by a cross sectional groove which is relatively narrow at its base and relatively wider at its radially outer part where the thread elements are formed. Obviously, a non-circular form of groove could not be provided in a main body part of unitary construction by normal production methods.

Various other modifications could be made to the inventive drill chuck. For example, the chuck body may be provided with a male threaded spigot portion instead of with a female screwthreaded recess 12, if required, and it will be understood that, depending upon the material of which the main body element is made, such means of attachment to a power tool driving spindle may be formed integrally with said main body element or formed in or on a metal insert to be moulded in a body element made of a synthetic plastics material. Similarly, if the nose cone is made largely of a synthetic plastics material the key pieces could be made of metal and suitably mounted within the otherwise plastics part of the nose cone.

## Claims

1. A drill chuck having a body part (10) in which converging apertures (16) are formed for the reception of respective jaws (18) said body part being formed also, intermediate its ends, with a circumferential groove (20) for the reception of a nut with a tapering internal thread so that the latter can engage thread elements (26) formed on the respective jaws (18) the chuck having also a bevel gear element which can be operated by an extraneous key to rotate the nut so that the jaws can be advanced or retracted in the body part, the body part (10) being constituted by two separate parts, that is to say by a main body element (34) and a nose cone element (36) connected together, characterised in that the converging apertures (16) for the reception of the respective jaws (18) are formed by converging grooves (48) in the main body element (34) and by respective key pieces (50) formed within the nose cone element (36), said key pieces being located within forward portions of the grooves (48) in the main body element (34), and in that the grooves (48) in the main body element (34) are each of V-form or T-form, the cross sectional shape of each jaw (18) being of complementary shape.

2. A drill chuck according to claim 1, further characterised in that the nut and bevel gear elements are formed integrally together, the integrally formed part (22) being located in its groove (20) as an unbroken ring as the main body element (34) and the nose cone element (36) are connected together.

3. A drill chuck according to claim 1, further characterised in that the nut and bevel gear elements are formed integrally together but diametrically split, the two parts being held together in their groove by one end of a cylndrical sleeve (32).

4. A drill chuck according to claim 3, further characterised in that means are provided for securely locating the cylindrical sleeve (32) in position against inadvertent displacement.

5. A drill chuck according to claim 1, further characterised in that the nut and bevel gear elements are formed separately, the nut element being diametrically split and held together in its groove (20) in the body part (10) by the bevel gear element formed as an unbroken ring.

6. A drill chuck according to any one of the preceding claims, further characterised in that holes (30) which are formed in the body part (10), for the reception of a pilot end of an extraneous chuck key for rotating the bevel gear element, are formed partly in the nose cone element (36) and partly in the main body element (34).

7. A drill chuck according to claim 6, further characterised in that the holes (30) which are formed in the body part (10) for the reception of a pilot end of an extraneous chuck key are provided with respective steel sleeves (52).

8. A drill chuck according to either one of claims 6 and 7, further characterised in that the nose cone element (36) is provided with notches (53) in the region of the holes (30) which reveal sections of the bevel gear element.

9. A drill chuck according to any one of the preceding claims, further characterised in that the nose cone element (36) is provided with inturned lip portions (62) adapted to snap fit into shallow grooves in part cylindrical surfaces (42) of the main body element (34) when the two parts are fitted together.

**Revendications**

1. Mandrin porte-foret ayant une partie de corps (10) où sont formées des ouvertures convergentes (16) pour la réception de mâchoires respectives (18), ladite partie de corps ayant également, entre ses extrémités, une gorge circonférentielle (20) pour la réception d'un écrou avec un filet interne s'effilant de façon que ce dernier puisse engager des éléments filetés (26) formés sur les mâchoires respectives (18), le mandrin ayant également un élément d'engrenage conique qui peut être commandé par une clef extérieure pour faire tourner l'écrou de façon que les mâchoires puissent être avancées ou retirées dans la partie de corps, la partie de corps (10) étant constituée de deux parties séparées, c'est-à-dire par un élément de corps principal (33) et un élément de cone de nez (36) reliés ensemble, caractérisé en ce que les ouvertures convergentes (16) pour la réception des mâchoires respectives (18) sont formées par des gorges convergentes (48) dans l'élément de corps principal (34) et par des pièces de clavettes respectives (50) formées dans l'élément de cone de nez (36), lesdites pièces de clavettes étant placées dans des parties des gorges (48) vers l'avant dans l'élément de corps principal (34) et en ce que les gorges (48) dans l'élément de corps principal (34) sont chacune en forme de V ou en forme de T, la forme en section transversale de chaque mâchoire (18) étant d'une forme complémentaire.

2. Mandrin porte-foret selon la revendication 1 caractérisé de plus en ce que les éléments d'écrou et d'engrenage conique font corps l'un avec l'autre, la partie intégralement formée (22) étant placée dans sa gorge (20) sous la forme d'une bague non fendue alors que l'élément de corps principal (34) et l'élément de cone de nez (36) sont reliés l'un à l'autre.

3. Mandrin porte-foret selon la revendication 1 caractérisé de plus en ce que les éléments d'écrou et d'engrenage conique font corps l'un avec l'autre mais sont diamétralement fendus, les deux parties étant maintenues ensemble dans leur gorge par une extrémité d'un manchon cylindrique (32).

4. Mandrin porte-foret selon la revendication 3 caractérisé de plus en ce que des moyens sont prévus pour localiser sûrement le manchon cylindrique (32) en position contre un déplacement par inadvertance.

5. Mandrin porte-foret selon la revendication 1 caractérisé de plus en ce que les éléments d'écrou et d'engrenage conique sont formés séparément, l'élément d'écrou étant diamétralement fendu et maintenu dans sa gorge (20) à la partie de corps (10) par l'élément d'engrenage conique ayant la forme d'une bague non fendue.

6. Mandrin porte-foret selon l'une quelconque des revendications précédentes caractérisé de plus en ce que des trous (30) qui sont formés dans la partie de corps (10), pour la réception d'une extrémité pilote d'une clef externe de mandrin pour faire tourner l'élément d'engrenage conique, sont formés partiellement dans l'élément de cone de nez (36) et partiellement dans l'élément de corps principal (34).

7. Mandrin porte-foret selon la revendication 6 caractérisé de plus en ce que les trous (30) qui sont formés dans la partie de corps (10) pour la réception d'une extrémité pilote d'une clef externe de mandrin sont pourvus de manchons respectifs d'acier (52).

8. Mandrin porte-foret selon l'une quelconque des revendications 6 à 7 caractérisé de plus en ce que l'élément de cone de nez (36) est pourvu d'encoches (53) dans la région des trous (30) qui révèlent des sections de l'élément d'engrenage conique.

9. Mandrin porte-foret selon l'une quelconque des revendications précédentes caractérisé de plus en ce que l'élément de cone de nez (36) est pourvu de parties de lèvre (62) tournées vers l'intérieur pouvant s'adapter automiquement dans des gorges peu profondes dans des surfaces cylindriques partielles (42) de l'élément de corps principal (34) lorsque les deux parties sont fixées l'une à l'autre.

**Patentansprüche**

1. Bohrfutter mit einem Körperteil (10), in dem konvergierende Öffnungen (16) zur Aufnahme zugeordneter Spannbacken (18) ausgebildet sind, wobei der Körperteil ferner zwischen seinem Ende mit einer Umfangsnut (20) für die Aufnahme einer Mutter versehen ist, die ein konisches Innengewinde aufweist, das mit an den zugeordneten Spannbacken (18) angeordneten Gewindeelementen (26) in Eingriff bringbar ist, und mit einem Kegelradelement, das mit einem zusätzlichen Schlüssel betätigbar ist, um die Mutter zu verdrehen, so daß die Spannbacken in dem Körperteil nach vorne oder nach hinten bewegbar sind, wobei der Körperteil (10) von zwei getrennten Teilen gebildet ist, nämlich von einem Hauptkörperelement (34) und einem vorderen Konuselement (36), die miteinander verbunden sind, dadurch gekennzeichnet, daß die konvergierenden Öffnungen (16) für die Aufnahme der zugeordneten Spannbacken (18) von konvergierenden Nuten (48) im Hauptkörperelement (34) und von entsprechenden Keilstücken (50) gebildet sind, die in dem vorderen Konuselement (36) ausgebildet sind, wobei die Keilstücke in vorderen Bereichen der Nuten (48) des Hauptkörperelementes (34) angeordnet sind, und daß die Nuten (48) in dem Hauptkörperelement (34) jeweils V- oder T-förmig sind, wobei die Spannbacken (18) jeweils eine komplementäre Querschnittsform haben.

2. Bohrfutter nach Anspruch 1, dadurch gekennzeichnet, daß die Mutter und das Kegelradelement einstückig ausgebildet sind, wobei der einstückig ausgebildete Teil (22) in seiner Nut (20) als ungeteilter Ring angeordnet ist, wenn das Hauptkörperelement (34) und das vordere Konuselement (36) miteinander verbunden sind.

3. Bohrfutter nach Anspruch 1, dadurch gekennzeichnet, daß die Mutter und das Kegelradelement einstückig miteinander verbunden, aber diametral geteilt sind, wobei die beiden Teile durch ein Ende einer zylindrischen Hülse (32) in ihrer Nut zusammengehalten sind.

4. Bohrfutter nach Anspruch 3, dadurch gekennzeichnet, daß Mittel vorgesehen sind, um die zylindrisch Hülse (32) gegen eine unbeabsichtigte Verlagerung in ihrer Position zuverlässig festzulegen.

5. Bohrfutter nach Anspruch 1, dadurch gekennzeichnet, daß die Mutter und das Kegelradelement als getrennte Teile ausgebildet sind, wobei die Mutter diametral geteilt und durch das als ungeteilter Ring ausgebildete Kegelrad in seiner Nut (20) in dem Körperteil (10) zusammengehalten ist.

6. Bohrfutter nach einem der vorhergehedenden Ansprüche, dadurch gekennzeichnet, daß Löcher (30), die in dem Körperteil (10) zur Aufnahme eines Zentrierendes eines zum Verdrehen des Kegelradelementes dienenden zusätzlichen Spannschlüssels ausgebildet sind, zum Teil in dem vorderen Konuselement (36) und z.T. in dem Hauptkörperelement (34) ausgebildet sind.

7. Bohrfutter nach Anspruch 6, dadurch gekennzeichnet, daß die Löcher (30), die in dem Körperteil (10) zur Aufnahme eines Zentrierendes eines zusätzlichen Spannschlüssels angeordnet sind, mit zugeordneten Stahlhülsen (52) versehen sind.

8. Bohrfutter nach einem der Ansprüche 6 oder 7, dadurch gekennzeichnet, daß das vordere Konuselement (36) im Bereich der Öffnungen (30) mit Ausschnitten (53) versehen ist, die Bereiche des Kegelrades freilegen.

9. Bohrfutter nach einem der vorhergehenden Ansprüche, dadurch gekennzeichnet, daß das vordere Konuselement (36) mit nach innen gerichteten Lückenbereichen (62) versehen ist, die in flache Nuten federnd eingreifen können, die in teilzylindrischen Flächen (42) des Hauptkörperelementes (34) ausgebildet sind, wenn die beiden Teile zusammengestreckt werden.

0  059  030

53
30
18
32
52
3
2
36
22

_FIG.1_

_FIG.2_

53
36
22
53

52  30  28
10
12
16  14
46
36
22  20  18  32  26

_FIG.3_

1

0 059 030

FIG.4

_FIG.5_

_FIG.6_